# EUROPÄISCHE PATENTANMELDUNG

(11) **EP 3 203 351 A1**
(43) Veröffentlichungstag der Anmeldung: **09.08.2017**
(21) Anmeldenummer: 17152752.6
(22) Anmeldetag: 24.01.2017
(51) Int. Cl.: G06F 1/16, F16M 11/04, F16M 11/10, F16M 11/20, F16M 11/22

(54) **KABELHALTER, KABELHALTERSYSTEM UND GERÄTEHALTERSYSTEM**

(30) Priorität: 26.01.2016 DE 102016101333
(71) Anmelder: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich

(57) **Zusammenfassung**

Es wird ein Kabelhalter (50) mit einem Gehäuse (51) beschrieben, mit einem Steckeraufnahmeraum (62) zur Aufnahme eines Stecker-/Buchsenpaares (S, B) zweier miteinander gekoppelter Kabelenden, mit einem Kabelaufnahmeraum (66), zur Aufnahme eines darin aufgewickelten Kabelabschnitts und einem Führungsschienen-Verbindungselement (70) zur Kopplung mit einer Führungsschiene (31). Der Kabelaufnahmeraum (66) ist als Kabeltrommelraum (66) ausgebildet ist, der den Steckeraufnahmeraum (62) umgibt. Weiterhin werden ein Kabelhaltersystem (40) mit mindestens einem solchen Kabelhalter (50) sowie ein Gerätehaltersystem (1) zur Halterung eines kabelgebundenen Geräts (ME) mit einem solchen Kabelhaltersystem (40) beschrieben.

## Beschreibung

Die Erfindung betrifft einen Kabelhalter, ein Kabelhaltersystem mit mindestens einem solchen Kabelhalter sowie ein Gerätehaltersystem zur Haltung eines kabelgebundenen Geräts mit einem solchen Kabelhaltersystem.

Unter einem kabelgebundenen Gerät ist dabei insbesondere ein mobiles Endgerät zu verstehen oder ein sonstiges elektrisches oder elektronisches Gerät, beispielsweise ein Mikrofon, eine Kamera oder Ähnliches, welches zumindest zeitweise, während es im Gerätehaltersystem verwendet wird, ein Energieversorgungs- und/oder Daten- bzw. Signalkabel verwendet bzw. verwenden kann, mit dem es an ein anderes Gerät und/oder eine Netzsteckdose oder dergleichen angeschlossen ist. Unter einem mobilen Endgerät ist dabei insbesondere ein flächiges bzw. flaches Kommunikationsendgerät mit einem Display auf einer Flachseite zu verstehen, beispielsweise ein Tablet-PC (kurz Tablet genannt), ein Smartphone, ein eBook-Reader oder Ähnliches. Halter der eingangs genannten Art zum Halten von Tablets, Smartphones oder dergleichen werden inzwischen am Markt auch als "Tablet-Halter" bezeichnet. Daher werden im Folgenden für ein Gerätehaltersystem, welches neben Tablets auch andere mobile Endgeräte, insbesondere Smartphones und eBook-Reader, halten kann, ohne Beschränkung auf die Halterung von Tablets auch die Begriffe "Tablet-Haltersystem" bzw. "Tablet-Halter" übernommen.

Normalerweise trägt der Benutzer derartige Endgeräte mit sich. In vielen Situationen besteht aber auch der Bedarf, das Gerät bequem bedienen zu können und in einer Stellung so zu positionieren, dass der Bildschirm für den Benutzer oder mehrere Personen bequem einsehbar ist, ohne das Gerät selber halten zu müssen. Hierzu müssen die Geräte so in einer Halterung gehalten werden, dass die eine Flachseite, nämlich die Anzeigefläche mit dem Touchdisplay, möglichst unbehindert zugänglich ist. Typische Einsatzorte für derartige Tablet-Halter sind beispielsweise in Fahrzeugen, an Präsentationständen wie beispielsweise in Museen, in Messen oder Verkaufsausstellungen bzw. Läden, in denen die mobilen Endgeräte präsentiert werden sollen, oder zur Halterung von elektronischen Lesegeräten wie Tablets oder eBook-Readern, wenn z. B. der Benutzer einen Text für eine Präsentation oder Rede ablesen möchte, also beispielsweise anstelle eines Rednerpults, oder mit Noten als Ersatz für einen klassischen Notenständer. Ebenso kann ein solches Gerätehaltersystem auch an anderen Stellen im gewerblichen Bereich, in Büros oder im Haushalt genutzt werden, beispielsweise an Schreibtischen, an Maschinen, in Küchen (insbesondere zur Halterung von eBook-Readern oder Tablets, auf denen gerade ein Rezept angezeigt wird), im Badezimmer etc.

Zwar weisen gerade solche mobilen Endgeräte meist Akkus auf, die im voll aufgeladenen Zustand eine lange Laufzeit haben, und sind daher oft über lange Zeit autark. Dennoch gibt es auch viele Situationen, in denen es wünschenswert wäre, wenn das Gerät permanent mit einem Ladekabel verbunden sein kann. Ein typischer Fall wäre ein Dauereinsatz in Verkaufsausstellungen, in Museen oder bei einer sehr lange andauernden Verwendung als Ersatz für ein Rednerpult oder einen Notenständer. In diesem Fall kann es äußerst ungünstig sein, wenn der Ladezustand des Akkus nicht mehr ausreicht, um das Gerät zu betreiben und beispielsweise mitten in einem Vortrag oder Konzert das Gerät ausfällt. Auch bei einer dauerhaften bzw. sehr langen bzw. quasi festen Installation im gewerblichen Bereich, im Büro oder im Haushalt ist es wünschenswert, wenn das Gerät ständig über ein Kabel mit einem Ladegerät oder Netzteil verbunden sein könnte. Darüber hinaus gibt es andere Geräte wie Mikrofone, Kameras, Lautsprecher etc., die in Gerätehaltern gehalten werden müssen und, sofern sie nicht über eine drahtlose Schnittstelle verfügen, ein Kabel zur Informationssignalübertragung benötigen.

Für alle diese Einsatzzwecke ist es wünschenswert, einen Kabelhalter am Gerätehaltersystem zur Verfügung stellen zu können, der eine sichere Unterbringung des Kabels erlaubt. Ein Problem hierbei ist, dass die Kabel in der Regel nicht genau auf die passende Länge konfektioniert, sondern entweder zu kurz oder zu lang sind. Ist ein Kabel zu kurz, wird in der Regel ein Verlängerungskabel verwendet, welches dann wiederum zu einem zu langen Gesamtkabel führt. Die überschüssige Kabellänge sollte sinnvollerweise irgendwo verstaut sein, was in den meisten Fällen auch relativ schnell bewerkstelligt werden muss. Bei Mikrofonen wird beispielsweise üblicherweise das Kabel einfach locker um den Ständer herumgewickelt. Dies ist prinzipiell natürlich auch bei anderen Geräten möglich, sieht aber zum einen unschön aus und bietet zudem auch keinen Schutz für das Kabel.

Aus der EP 0 844 504 A2 ist eine Anschlusseinheit für Lichtwellenleiter-Kabel bekannt. Diese Anschlusseinheit umfasst ein Gehäuse zum Aufstecken auf einen Leitungskanal. Im Gehäuse befinden sich zwei Steckerhalterungen zur Aufnahme von Lichtleiter-Steckern. Im Inneren des Gehäuses ist zudem Platz, um überschüssiges Kabel unterzubringen, wenn bei der Montage das Gehäuse geöffnet ist. Diese Anschlusseinheiten sind jedoch speziell auf den dort beschriebenen Einsatzzweck einer Montage an einem Kabelkanal zugeschnitten.

Es ist eine Aufgabe der vorliegenden Erfindung, einen Kabelhalter bzw. ein Kabelhaltersystem, welche flexibel für die eingangs genannten Zwecke eingesetzt werden können, und ein Gerätehaltersystem mit einem solchen Kabelhaltersystem anzugeben.

Diese Aufgabe wird zum einen durch einen Kabelhalter nach Anspruch 1 und durch ein Kabelhaltersystem nach Anspruch 7 sowie zum anderen durch ein Gerätehaltersystem nach Anspruch 9 gelöst.

Der erfindungsgemäße Kabelhalter weist ein Gehäuse mit einem Steckeraufnahmeraum zur Aufnahme eines Stecker-/Buchsenpaares zweier miteinander gekoppelter Kabelenden auf. Bei einem solchen Steckeraufnahmeraum kann es sich um eine Kavität bzw. eine Kammer oder einen sonstigen Bereich im Gehäuse des Kabelhalters handeln. Des Weiteren weist das Gehäuse einen Kabelaufnahmeraum zur Aufnahme eines darin aufgewickelten Kabelabschnitts auf. Bei diesem Kabelaufnahmeraum kann es sich ebenfalls um eine Art Kammer oder einen Bereich im oder am Gehäuse handeln, wobei dieser Kabelaufnahmeraum bzw. Bereich insbesondere auch an einer offenen Seite des Kabelhalters selbst angeordnet sein kann. Dieser Kabelaufnahmeraum ist bevorzugt vom Steckeraufnahmeraum getrennt, d. h. es handelt sich um separate Räume bzw. Bereiche im bzw. am Gehäuse, wobei diese jedoch - wie nachfolgend erläutert - miteinander verbunden sein können. Erfindungsgemäß ist der Kabelaufnahmeraum als Kabeltrommelraum bzw. Kabeltrommelteil ausgebildet, der den Steckeraufnahmeraum umgibt. Der darin unterzubringende Kabelabschnitt kann somit z. B. vorteilhafterweise einfach um einen Rollenkern aufgewickelt werden. Schließlich umfasst der Kabelhalter ein vorzugsweise am Gehäuse angeordnetes Führungsschienen-Verbindungselement, beispielsweise, wie später beschrieben, ein Nut- oder ein Federelement, zur Kopplung mit einer Führungsschiene. Dieses Führungsschienen-Verbindungselement bzw. die Führungsschienen-Verbindung erlaubt bevorzugt ein Verschieben des Kabelhalters bzw. des Gehäuses des Kabelhalters entlang zumindest eines Abschnitts der Führungsschiene.

In dem erfindungsgemäßen Kabelhalter kann somit ein Lade- bzw. Netzkabel oder auch ein Daten- bzw. Signalkabel des Geräts, welches üblicherweise zumindest am gerätefernen Kabelende einen Stecker aufweist, mit der Buchse eines entsprechenden Verlängerungskabels gekoppelt werden und dabei das Stecker-/Buchsenpaar sicher im Kabelhalter gehalten werden. Im Kabeltrommelraum kann dann zumindest ein Teil der überschüssigen Kabellänge untergebracht werden, wodurch gleichzeitig auch das Kabel am bzw. im Gehäuse des Kabelhalters gesichert werden kann. Dabei kann der Kabelhalter in den meisten Fällen vorteilhaft so entlang der Führungsschiene positioniert werden, dass die Position an eine Kabellänge des Kabels am Geräts angepasst ist und somit nicht zu viel überschüssige Kabellänge im Kabelhalter aufgewickelt werden muss.

Ein erfindungsgemäßes Kabelhaltersystem weist mindestens einen solchen Kabelhalter auf und außerdem eine Führungsschiene zur Kopplung mit diesem Kabelhalter. Dementsprechend umfasst die Führungsschiene ein Verbindungselement zur Kopplung mit dem Führungsschienen-Verbindungselement des Kabelhalters. Die Führungsschiene weist z. B. bei einer Nut-Feder-Verbindung eine Nut für das Federelement am Kabelhalter auf oder umgekehrt eine Feder, welche in eine Nut des Kabelhalters eingreifen kann, wobei die erste Variante bevorzugt ist. Im bestimmungsgemäßen Einsatz sind dann der Kabelhalter und die Führungsschiene des Kabelhaltersystems entsprechend über die Führungsschienen-Verbindung gekoppelt.

Ein solches Kabelhaltersystem kann auch noch weitere Kabelhalter der oben genannten Art aufweisen, die insbesondere auch mit derselben Schiene gekoppelt sein können, um beispielsweise das Kabel, insbesondere ein Verlängerungskabel. nochmal an einer weiteren Position entlang der Führungsschiene, z. B. durch Aufwickeln in dem Kabeltrommelraum dieses weiteren Kabelhalters, zu halten. Dabei wäre es auch möglich, das Verlängerungskabel nur abschnittsweise zu verlängern und jeweils die nächste Kopplung mit einem weiteren Verlängerungskabel in einem weiteren Kabelhalter des Kabelhaltersystems unterzubringen.

Ein erfindungsgemäßes Gerätehaltersystem zur Halterung des kabelgebundenen Geräts weist entsprechend ein solches Kabelhaltersystem auf.

Wie bereits eingangs erwähnt, wird das Gerätehaltersystem besonders bevorzugt zur Halterung eines mobilen Endgeräts wie eines Tablets, eines Smartphones oder eines eBook-Readers verwendet.

Entsprechend wird auch bevorzugt das Kabelhaltersystem zur Halterung eines Kabels bzw. eines Kabelabschnitts eines mobilen Endgeräts wie eines Tablets oder eines Smartphones verwendet.

Besonders bevorzugt erfolgt die Halterung des Kabels des Geräts in einem Kopplungsbereich mit einem Verlängerungskabel.

Weitere besonders vorteilhafte Ausgestaltungen und Weiterbildungen der Erfindung ergeben sich aus den abhängigen Ansprüchen sowie der nachfolgenden Beschreibung, wobei Patentansprüche der unterschiedlichen Kategorien auch entsprechend den abhängigen Ansprüchen der anderen Kategorien weitergebildet sein können und Merkmale verschiedener Ausführungsbeispiele zu neuen Ausführungsbeispielen kombiniert werden können.

Mobile Endgeräts wie Tablets, Smartphones, eBook-Reader oder dergleichen weisen üblicherweise ein Lade-und oder Datenkabel nach dem USB-Standard auf.

Dieses Kabel weist in der Regel an dem vom Gerät abgewandten Ende einen USB-Typ-A-Stecker auf. Daher ist der Steckeraufnahmeraum bevorzugt so dimensioniert, dass er insbesondere ein Stecker-/Buchsenpaar nach dem USB-Standard, beispielsweise einen Typ-A-Stecker und eine damit gekoppelte A-Buchse, aufnehmen kann.

Ganz besonders bevorzugt ist der Steckeraufnahmeraum so ausgebildet, dass die Kopplung eines darin gehaltenes Stecker-/Buchsenpaars gesichert wird, d. h. dass der Stecker daran gehindert wird, selbstständig oder durch Zug auf eines der Kabelenden aus der Buchse herauszurutschen. Dies ist möglich, indem im Steckeraufnahmeraum Halteelemente, Kabelsicherungen oder dergleichen angeordnet sind. Wenn bereits die Dimensionierung des Steckeraufnahmeraums so gewählt ist, dass um das gekoppelte Stecker-/Buchsenpaar herum nicht zu viel Freiraum verbleibt, kann auch ohne zusätzliche Teile im Steckeraufnahmeraum bereits die Zusammenkopplung gesichert sein.

Die minimale Länge des Steckeraufnahmeraums beträgt bevorzugt 70 mm, besonders bevorzugt 75 mm. Die maximale Länge des Steckeraufnahmeraums beträgt bevorzugt 85 mm, besonders bevorzugt 90 mm. Die minimale Breite des Steckeraufnahmeraums beträgt bevorzugt 15 mm, besonders bevorzugt 18 mm. Die maximale Breite des Steckeraufnahmeraums beträgt bevorzugt 22 mm, besonders bevorzugt 25 mm. Die minimale Tiefe des Steckeraufnahmeraums beträgt bevorzugt 8 mm, besonders bevorzugt 10 mm. Die maximale Tiefe des Steckeraufnahmeraums beträgt bevorzugt 14 mm, besonders bevorzugt 16 mm. Der Steckeraufnahmeraum hat ganz besonders bevorzugt eine maximale Länge von ca. 80 mm, eine Breite von ca. 20 mm und eine Tiefe von ca. 12 mm.

Erfindungsgemäß umgibt der Kabeltrommelraum den Steckeraufnahmeraum. Beispielsweise kann der Kabeltrommelraum sich ringförmig um den Steckeraufnahmeraum erstrecken. Hierzu ist vorzugsweise der Steckeraufnahmeraum in einem ersten Gehäuseteil angeordnet, welcher eine Seitenwand bzw. Mantelwand, d. h. eine mantelartige oder im Wesentlichen ringförmige Wand aufweist, die wiederum einen Rollenkern für den Kabeltrommelraum bilden kann. Diese Seitenwand schließt dann also in ihrem Inneren den Steckeraufnahmeraum ein und ihre Außenseite hat gleichzeitig die Funktion als Rollenkern des Kabeltrommelteils.

Eine solche Seitenwand des Gehäuseteils kann vorzugsweise zumindest eine, vorzugsweise zwei Durchführungen, ganz besonders bevorzugt Schlitze oder dergleichen für die Kabelenden aufweisen, so dass die Kabelenden durch den oder die Schlitze in den Kabeltrommelraum, d. h. in das Innere des Gehäuseteils, hineingeführt werden können, in dem sich dann das Stecker-/Buchsenpaar befindet, und dann ein überschüssiger Kabelteil außen auf das Gehäuseteil im Kabeltrommelraum aufgewickelt werden kann.

Besonders bevorzugt ist der Steckeraufnahmeraum in einem Gehäuseteil angeordnet, welches an einer Rückseite, z. B. außenseitig an einer Rückwand des Gehäuseteils, das Führungsschienen-Verbindungselement aufweist. Als Rückseite bzw. Rückwand wird hierbei die Seite bzw. Wand des Kabelhalters bezeichnet, welche in Richtung der Führungsschiene weist. Wenn dieses Gehäuseteil wie oben beschrieben gleichzeitig den Steckeraufnahmeraum und den Kabeltrommelraum bildet, sind somit alle diese Komponenten bzw. Funktionen zur Unterbringung des Kabels bereits in einem einzigen Gehäuseteil realisiert, welches einstückig in einem Spritzgussprozess und somit kostengünstig hergestellt werden kann.

Besonders bevorzugt ist das Gehäuseteil so ausgebildet, dass der Steckeraufnahmeraum zu einer von der Rückseite (und somit von der Führungsschiene) abgewandten Vorderseite hin offen ist. Der Benutzer kann somit einfach von vorne in einen bereits mit der Führungsschiene gekoppelten Kabelhalter das zusammengesteckte Stecker-/Buchsenpaar einlegen oder einstecken.

Ebenfalls bevorzugt weist das Gehäuseteil an seiner Vorderseite einen sich radial nach seitlich außen erstreckenden, vorzugsweise im Wesentlichen um den Steckeraufnahmeraum umlaufenden Kragen auf. Dieser Kragen bildet eine von der Führungsschiene beabstandete vordere Seitenwand für den Kabeltrommelraum des zusammengesetzten Kabelhaltersystems, d. h. wenn der Kabelhalter mit der Führungsschiene gekoppelt ist. Die andere "Seitenwand" wird dann durch die Kopplung mit der Führungsschiene selbst ersetzt. Mit anderen Worten, der Kabeltrommelraum ist im Inneren durch die den Kern der Kabeltrommel bildende, um den Steckeraufnahmeraum umlaufende Seitenwand des Gehäuseteils gebildet, die vordere Wand bzw. Wange der Kabeltrommel wird durch diesen Kragen am Gehäuseteil gebildet und die hintere Wand bzw. Wange der Kabeltrommel ergibt sich durch die Kopplung mit der Führungsschiene durch die entsprechend zum Kabelhalter weisende Fläche der Führungsschiene.

Wie bereits eingangs erwähnt, gibt es für die Führungsschienen-Verbindung verschiedene Realisationsmöglichkeiten, wobei vorzugsweise eine Nut-/Federverbindung oder dergleichen verwendet wird. Dabei sind das Federelement und entsprechend die Schiene vorzugsweise mit einem hinterschnittenen Querschnitt ausgebildet, z. B. T-förmig, als Schwalbenschwanzführung oder dergleichen. Besonders bevorzugt weist der Kabelhalter, vorzugsweise das Gehäuseteil des Kabelhalters, an der Rückseite als Führungsschienen-Verbindungselement ein Federelement für eine solche Nut-/Federverbindung mit der Führungsschiene auf. Grundsätzlich wäre es aber auch möglich, dass die Federelemente an der Führungsschiene angeordnet sind oder eine entsprechende Nut im Gehäuse des Kabelhalters angeordnet ist.

Grundsätzlich können auch mehrere Federelemente entlang einer Längsachse, welche der Nut-Längsachse entspricht, angeordnet sein, um eine sichere Halterung und Führung des Kabelhalters in der Führungsschiene zu ermöglichen.

Insbesondere in dem Fall, in dem das Gehäuseteil einen nach vorne hin offenen Steckeraufnahmeraum aufweist, weist der Kabelhalter bevorzugt einen lösbar mit dem Gehäuseteil koppelbaren Deckel als ein zweites Gehäuseteil auf, welches das erste Gehäuseteil auf der Vorderseite abdeckt.

Zur Kopplung weisen das Gehäuseteil und der Deckel beispielsweise zusammenwirkende Klemm- und/oder Steckelemente auf. Zum Beispiel kann der Deckel am Gehäuseteil aufgeklipst werden und/oder unter Zusammenwirken der Klemmund/oder Steckelemente zusammengeschoben und in entsprechender Weise auch wieder gelöst werden.

Besonders bevorzugt weist der Deckel zum ersten Gehäuseteil hin weisende, laschenartige Gehäusewandabschnitte auf, die den Kabeltrommelraum radial seitlich - d. h. nach außen hin - begrenzen, so dass der Kabeltrommelraum in radialer Richtung nach innen durch die Wandung des ersten Gehäuseteils, welche den Kern der Kabeltrommel bildet, und nach außen hin durch die Wandabschnitte am Deckel im Wesentlichen begrenzt sein kann.

Das Gerätehaltersystem weist in der Regel eine Haltebasis auf, beispielsweise, sofern das Gerätehaltersystem als ein Ständer, besonders bevorzugt als ein Bodenständer ausgebildet ist, mit einer Säule. Diese kann untenseitig, d. h. an dem vom Gerät abgewandten Ende mit einem geeigneten Fuß oder dergleichen ausgestattet sein, mit dem sie auf dem Boden oder einem Tisch oder Ähnlichem abgestellt werden kann. Diese Säule kann dann die Führungsschiene zur Kopplung mit dem Kabelhalter umfassen. Besonders bevorzugt ist die Säule selbst als Führungsschiene ausgebildet oder die Führungsschiene ist in die Säule integriert. Die Säule weist also vorzugsweise schon eine entsprechende Nut für das Federelement selber auf.

Alternativ kann die Haltebasis aber auch eine entsprechende Führungsschiene in anderer Form aufweisen, beispielsweise als Teil eines Haltearms oder zur Montage an einer Wand oder an einem sonstigen Bauteil oder mit einer Klemmung zum Festklemmen an irgendwelchen Gegenständen etc. Beispielsweise kann bei einem Gerätehaltersystem zur Halterung eines Tablets oder eBook-readers in einer Küche die Führungsschiene unter einem Oberschrank befestigt werden. Die Führungsschiene kann auch so ausgebildet sein, dass weitere Komponenten des Gerätehaltersystems damit koppelbar sind, beispielsweise ein Kopplungsteil zur Kopplung mit dem Gerät. Dabei kann dieses Kopplungsteil auch entlang der Führungsschiene verschiebbar angeordnet sein.

Bevorzugt kann das Gerätehaltersystem eine Haltebasis, insbesondere mit einer zuvor beschriebenen Säule, aufweisen und ein damit verbundenes Kopplungsteil zur Kopplung mit dem Gerät, wobei die Haltebasis, bevorzugt die Säule, ein Profilrohr umfasst und ein an eine Abmessung des Profilrohrs angepasstes Koppelstück, welches mit dem Kopplungsteil zur Kopplung mit dem Gerät verbunden ist. Das Koppelstück kann z. B. stirnseitig in das Profilrohr einsteckbar sein und ist bevorzugt dann an eine innere Abmessung des Profilrohrs angepasst.

Das Koppelstück kann beispielsweise wiederum fest am Kopplungsteil angeordnet sein bzw. Teil desselben sein. Über das Koppelstück ist es dann möglich, verschiedene Kopplungsteile an einer Haltebasis zu verwenden, indem einfach das Koppelstück vom Profilrohr entfernt wird und ein anderes Koppelstück mit einem anderen Kopplungsteil beispielsweise in oder an das Profilrohr ein- bzw. angesteckt wird, um die Gerätehalterung für ein kabelgebundenes Gerät eines anderen Typs umzurüsten. Diese Auswechselbarkeit des Kopplungsteils an der Haltebasis kann auch unabhängig von dem erfindungsgemäßen Kabelhalter bzw. Kabelhaltersystem vorteilhaft genutzt werden.

Das Profilrohr kann kostengünstig aus Kunststoff oder Metall, besonders bevorzugt aus Aluminium hergestellt werden. Vorzugsweise ist das Profilrohr bezüglich der äußeren Dimensionen ein im Wesentlichen rechteckiges Profilrohr und weist bevorzugt auf einer Flachseite eine Nut zur Bildung der Führungsschiene auf. Das Koppelstück kann besonders bevorzugt aus Kunststoff, beispielsweise als günstiges Spritzgussteil, hergestellt sein.

Für die Realisierung des Kopplungsteils zur Kopplung mit dem zu haltenden Gerät gibt es verschiedene Möglichkeiten. Um eine Kopplung bzw. Halterung von möglichst vielen unterschiedlichen Gerätetypen zu erlauben, kann das Kopplungsteil, insbesondere als Teil eines Tablet-Halters, bevorzugt so ausgebildet sein, dass es eine Klemmeinrichtung mit zwei an einem Führungsschlitten in einer Längsrichtung, d. h. in einer Öffnungs-/Verschlussrichtung, gegeneinander - d. h. aufeinander zu und voneinander weg - verschiebbar gelagerten Backen aufweist. Der Führungsschlitten kann beispielsweise als eine Art Gestell oder Gehäuse mit Führungen für die Backen aufgebaut sein. Er kann an einer beliebigen Haltebasis, beispielsweise einem Ständer, Arm oder dergleichen, vorzugsweise beweglich, befestigt sein. Der Führungsschlitten ist bevorzugt schwenkbar an dieser Basis des Tablet-Halters befestigt, besonders bevorzugt um eine Achse, die senkrecht zur Oberfläche des mobilen Endgerätes steht, sodass das mobile Endgerät insbesondere von einer Hochkant- in eine Breitformat-Stellung und zurück geschwenkt werden kann

Die Backen dienen zum Festklemmen des mobilen Endgerätes. Über einen Mechanismus, welcher beispielsweise in einem Hohlraum des Führungsschlittens untergebracht sein kann, sind diese Backen so miteinander gekoppelt, dass bei einer Bewegung einer der Backen relativ zum Führungsschlitten die gegenüberliegende Backe synchron relativ zum Führungsschlitten mitbewegt wird. Das heißt, wenn eine Backe zur Mitte des Führungsschlittens hin bewegt wird, tut dies automatisch auch die andere Backe, da sich die Backen aufeinander zu bewegen und umgekehrt auseinander bewegen, wenn eine der Backen nach außen gezogen wird. Die Backen vollführen also relativ zueinander eine gegenläufig synchrone Bewegung.

Der Bewegungsmechanismus kann hierzu beispielsweise gegenläufige Zahnstangen (bzw. Stangen mit zumindest einer gezahnten Kante) aufweisen, die jeweils einer der Backen zugeordnet sind, d. h. mit dieser gekoppelt oder in das Backenteil integriert sind. Als ein weiteres Element kann der Bewegungsmechanismus dann zumindest ein geeignetes Zahnrad aufweisen, über welches diese Zahnstangenelemente miteinander gekoppelt sind. Der Bewegungmechanismus kann vorzugsweise auch zumindest ein Rückstellelement wie eine Feder etc. aufweisen. Dieses drückt die Backen bevorzugt in eine Schließstellung, d. h. die Backen werden durch das Rückstellelement aufeinander zu bewegt. Vorzugsweise wird eine Druckfeder eingesetzt, da diese besonders geräuscharm bzw. geräuschlos arbeitet. Es können auch mehrere solcher Rückstellelemente parallel eingesetzt werden.

Ein solcher Bewegungsmechanismus kann bevorzugt mittels einer Schließeinrichtung so blockiert werden, dass ein Blockierelement in einer Blockierstellung in das Zahnrad und/oder eines der Zahnstangenelemente bzw. dessen Zähne eingreift.

Die Backen können als einfache Klemmbacken ausgebildet sein, die z. B. flache Andruckflächen aufweisen, die seitlich am Rand gegen das Endgerät drücken. Um das Endgerät aber möglichst sicher zwischen den Backen zu halten und ein Heraushebeln zwischen den geschlossenen Backen zu vermeiden, weisen die Backen vorzugsweise Krallen auf, die ein zu haltendes Gerät, insbesondere mobiles Endgerät, an zwei einander gegenüberliegenden Kanten umgreifen. Dabei kann an einer Backe nur eine Kralle vorhanden sein, aber bevorzugt auch mehrere - z. B. zwei - parallel zueinander angeordnete Krallen, die auch untereinander über Stege oder dergleichen gekoppelt sein können. Dabei kann zwischen den Krallen ein Freiraum zur Durchführung eines Kabels für das Gerät verbleiben.

Die Krallen sind bevorzugt so ausgebildet, dass ein Krallenüberstand, d. h. die Länge eines Teils der Kralle, mit dem diese auf der Vorderseite das zu haltende Tablet übergreifen kann, mindestens 5 mm, weiter bevorzugt mindestens 6 mm, beträgt.

Vorzugsweise ist an dem Tablet-Halter zumindest eine Auflagefläche, an welcher ein zu haltendes mobiles Endgerät mit seiner mit seiner vom Display abgewandten Rückseite anliegt, und/oder zumindest eine Innenseite der Krallen mit einer rutschhemmenden Oberfläche versehen. Dadurch kann auch ein seitliches Herausziehen des mobilen Endgeräts aus den Backen, insbesondere, wenn diese Krallen aufweisen, vermieden oder zumindest sehr stark gehemmt werden.

Insbesondere bevorzugt können die Auflagefläche und/oder die Innenseite der Krallen jeweils mit einer gummielastischen Oberfläche versehen sein. Unter einer gummielastischen Oberfläche ist dabei eine Oberfläche bzw. ein Oberflächenteil aus einem Teil wie ein Elastomer, Gummi, Kautschuk, Silikonkautschuk oder ähnlichem Material zu verstehen, welches ein Verschieben einer glatten Oberfläche gegenüber diesem Material stark erschwert oder sogar verhindert. Besonders bevorzugt wird hierfür ein thermoplastisches Elastomer (TPE) eingesetzt.

Die rutschhemmenden, insbesondere gummielastischen, Oberflächen können dabei besonders bevorzugt in Form von Einlagen realisiert werden. Alternativ können die Auflagefläche und/oder die Krallen innenseitig rutschhemmend beschichtet sein.

Weiter kann der Tablet-Halter als eine rutschhemmende Oberfläche einen Auflageflächenbereich aufweisen, an welchem ein zu haltendes mobiles Endgerät mit seiner Rückseite anliegt, welches mit einer Haftoberfläche ausgestattet ist. Das heißt, z. B. neben der gummielastischen Oberfläche ist nun noch ein Auflagenbereich so ausgestaltet, dass die Rückseite des mobilen Endgerätes hieran haftet. Solche Haftoberflächen können mit einer klebbaren Klebefläche, ähnlich wie bei den bekannten Haftnotizzetteln, ausgebildet sein. Vorzugsweise kann die Haftoberfläche durch eine mikrostrukturierte Silikonfolie gebildet werden. Hierbei basiert die Haftung auf den van der Waals Anziehungskräften. Die Silikonfolie kann vorzugsweise derart mikrostrukturiert sein, dass sie ca. 29.0000 Haftelemente pro cm² aufweist. Sie kann aber auch noch feiner strukturiert sein.

Bei einer besonders bevorzugten Ausgestaltung weist der Gerätehalter eine Haltebasis, vorzugsweise mit einer Säule und einem damit verbundenen Kopplungsteil, zur Kopplung mit dem Gerät auf, wobei dieses Kopplungsteil über ein selbsthaltendes Gelenk schwenkbar mit der Haltebasis, vorzugsweise der Säule, verbunden ist. Dies hat den Vorteil, dass das gehaltene Gerät immer in der gewünschten Schwenkstellung gesichert gehalten wird, ohne dass der Benutzer beispielsweise mit einer Hand die Schwenkstellung einstellen muss und mit einer anderen Hand für eine Arretierung in dieser Schwenkstellung sorgen muss, wie dies beispielsweise bisher bei den meisten Haltern der Fall ist. Eine solche Verbindung des Kopplungsteils mit der Haltebasis über ein selbsthaltendes Gelenk ist im Übrigen auch ohne den erfindungsgemäßen Kabelhalter von Vorteil. Bei einer besonders bevorzugten Variante verbindet dieses selbsthaltende Gelenk das Koppelstück, welches wie oben beschrieben mit dem Profilrohr verbunden wird, mit den übrigen Teilen des Kopplungsteils.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel schematisch. Es zeigen:
- Figur 1: eine perspektivische Rückansicht eines Ausführungsbeispiels eines Gerätehaltersystems mit einem darin gehaltenen Tablet-PC und einem Ausführungsbeispiel eines erfindungsgemäßen Kabelhaltersystems,
- Figur 2: eine Rückansicht des Gerätehaltersystems aus Figur 1 mit dem Kabelhaltersystem,
- Figur 3: eine Frontansicht des oberen Teils des Gerätehaltersystems aus Figur 1,
- Figur 4: eine perspektivische Draufsicht von schräg oben auf ein Koppelstück für ein Gerätehaltersystem nach Figur 1,
- Figur 5: eine perspektivische Seitenansicht auf das Koppelstück gemäß Figur 4,
- Figur 6: eine perspektivische Unteransicht auf das Koppelstück gemäß Figur 4 und 5 und eine perspektivische Draufsicht auf ein Profilrohr für eine Säule für ein Gerätehaltersystems nach Figur 1 zur Erläuterung der Verkopplung des Koppelstücks mit dem Profilrohr,
- Figur 7: eine perspektivische Frontansicht eines Ausführungsbeispiels eines Gehäuseteils eines Ausführungsbeispiels eines erfindungsgemäßen Kabelhalters,
- Figur 8: eine perspektivische Rückansicht des Gehäuseteils des Kabelhalters gemäß Figur 7,
- Figur 9: eine perspektivische Oberansicht des Gehäuseteils des Kabelhalters gemäß Figur 7 und 8,
- Figur 10: eine perspektivische Frontansicht eines Deckels für ein Gehäuseteil des Kabelhalters gemäß den Figur 7 bis 9,
- Figur 11: eine perspektivische Rückansicht des Deckel des Kabelhalters gemäß Figur 10,
- Figur 12: eine perspektivische Rückansicht des Kabelhalters (ohne Kabel) mit einem Gehäuseteil gemäß den Figuren 7 bis 9 und einem Deckel gemäß den Figuren 10 und 11,
- Figur 13: eine perspektivische Rückansicht des Kabelhalters wie in Figur 12, jedoch mit Kabel.

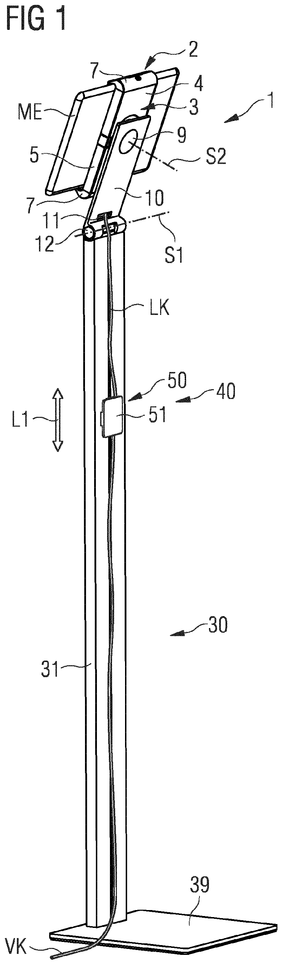

Das in den Figuren 1 bis 3 dargestellte Ausführungsbeispiel eines Gerätehaltersystems 1 weist ein Basisteil 30 in Form eines Bodenständers auf, mit einem Fuß 39 in Form einer Grundplatte bzw. Sockelplatte, an dem an einem seitlichen Rand eine sich senkrecht nach oben erstreckende Säule 31 befestigt ist. Diese Säule 31 ist, wie später noch genauer erläutert wird, als Führungsschiene 31 für ein Kabelhaltersystem 40 ausgebildet. In bzw. an dieser Führungsschiene 31 ist ein Kabelhalter 50 mit einem Gehäuse 51 in einer Längsrichtung L1 entlang der Führungsschiene 31 verschiebbar angeordnet.

Am oberen freien Ende der Säule 31 bzw. Führungsschiene 31 befindet sich ein Kopplungsteil 2 zur Halterung eines mobilen Endgeräts ME, hier konkret eines Tablets ME. Dieses Kopplungsteil 2 ist dabei über ein selbsthaltendes Gelenk 12, d. h. ein Gelenk 12, das in jeder eingestellten Stellung von selber die Position hält, ohne dass ein Klemmen oder Nachziehen des Gelenks 12 erforderlich ist, mit der Säule 31 gekoppelt. Um eine Schwenkachse S1 dieses Gelenks 12 ist das Kopplungsteil 2 so verschwenkbar, dass die Neigung des Kopplungsteils 2 und somit die Neigung des Tablets bzw. der Tablet-Oberfläche mit dem Bildschirm eingestellt werden kann. Das Kopplungsteil 2 weist hierzu einen Schwenkarm 10 auf, der mit einem äußeren Gehäuseteil des Gelenks 12 drehfest verbunden ist und der an seinem oberen freien Ende ein Kopplungselement 9 aufweist, an dem eine Klemmeinrichtung 3 zur Halterung des Tablets ME befestigt ist.

Die Klemmeinrichtung 3 weist einen Führungsschlitten 6 auf, welcher hier in einem mittleren Bereich erkennbar ist, sowie zwei daran in einer Längsrichtung L2 verschiebbar angeordnete Backen 4, 5, die an ihren Enden jeweils Krallenteile 7 aufweisen. Mit diesen Krallenteilen 7 wird das Tablet ME, wie in den Figuren 1 bis 3 dargestellt, an zwei gegenüberliegenden Kanten umgriffen und somit zwischen den Backen 4, 5 eingeklemmt. Im Inneren des Führungsschlittens 6 befindet sich ein Bewegungsmechanismus (nicht dargestellt), über den die beiden Backen 4, 5 so miteinander gekoppelt sind, dass bei einer Bewegung einer der Backen 4, 5 relativ zum Führungsschlitten 3 die gegenüberliegende Backe 5, 4 synchron relativ zum Führungsschlitten 3 mitbewegt wird. Durch eine ebenfalls im Inneren des Führungsschlittens 6 angeordnete Schließeinrichtung (nicht dargestellt) kann der Bewegungsmechanismus blockiert, d. h. abgeschlossen werden. Hierzu kann ein Schließwerkzeug genutzt werden, dass durch einen Kanal durch ein Gehäuse der Klemmeinrichtung 3 in eine Schließwerkzeugaufnahme (nicht dargestellt) gesteckt wird, um die Schließeinrichtung zu betätigen.

Jedes Krallenteil 7 der Backen 4, 5 weist hier zwei Krallen 7K auf, die über einen Steg 7S miteinander verbunden sind. Dadurch ergibt sich zwischen den Krallen 7K eines Krallenteils 7 jeweils ein Durchlass 8, der für ein Kabel LK zum Anschluss an das Tablet ME genutzt werden kann, da sich bei den meisten Tablets der Kabelanschluss für das Lade- und/oder Datenverbindungskabel mittig an einer Tablet-Kante befindet.

Die Krallen 7K weisen bevorzugt einen Krallenüberstand von mindestens 5-6 mm auf. Dies macht ein Aufhebeln der Krallenteile 7 gegen die normalen Toleranzen der Bauteile des Bewegungsmechanismus und einer Schließeinrichtung ohne Werkzeug nahezu unmöglich.

Das Kopplungselement 9 am Schwenkarm 10 wirkt mit einem Kopplungselement (nicht dargestellt) am Führungsschlitten 6 so zusammen, dass sich die Klemmeinrichtung 3 mit einem darin befindlichen Tablet ME um eine senkrecht zur Oberfläche des Tablet-Halters bzw. der Display-Oberfläche des gehaltenen Tablets ME verlaufende Drehachse S2 schwenken lässt und so das Tablet ME von der in den Figuren 1 bis 3 dargestellten Querformat-Position in eine Hochformat-Position gebracht werden kann. Die Drehachse S2 verläuft senkrecht zur Schwenkachse S1 des Gelenks 12. Im Schwenkarm 10 befindet sich ein Durchbruch 11, durch den das Kabel LK für das Tablet ME von der Rückseite der Säule hindurchgeführt und dann weiter durch den Durchlass 8 im (unteren) Krallenteil 7 zum Tablet ME werden kann.

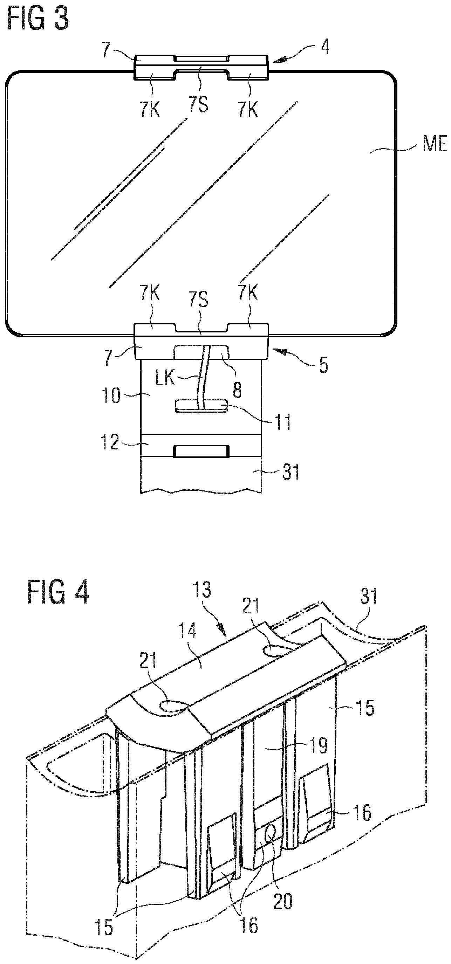

Die Verbindung des Kopplungsteils 2 über das Schwenkgelenk 12 mit der Säule 31 erfolgt mit Hilfe eines Koppelstücks 13, wie es in den Figuren 4 bis 6 gezeigt ist. Dieses Koppelstück 13 weist oben ein Gelenklager 14 auf (siehe Figur 4), welches mittels Schrauben (nicht dargestellt) von unten durch Löcher 21 in ein bezüglich des Koppelstücks 13 dann feststehendes Gehäuseteil des Gelenks 12 geschraubt werden kann. Ein zu diesem ersten Gehäuseteil bewegliches zweites Gehäuseteil des Gelenks 12 ist wie erwähnt wiederum mit dem Schwenkarm 10 drehfest verbunden.

Vom Gelenklager 14 erstreckt sich nach unten (die Richtungen "unten" und "oben" beziehen sich hier immer auf die in den Figuren dargestellte Position des Koppelstücks beim Einstecken von oben in eine Säule 31, wie sie in den Figuren 1 bis 3 dargestellt ist) eine Anzahl von Zungen 15, 17, 18, 19, die beim Einstecken in das obere stirnseitige Ende der Säule 31 innenseitig gegen die Wände der Säule 31 drücken.

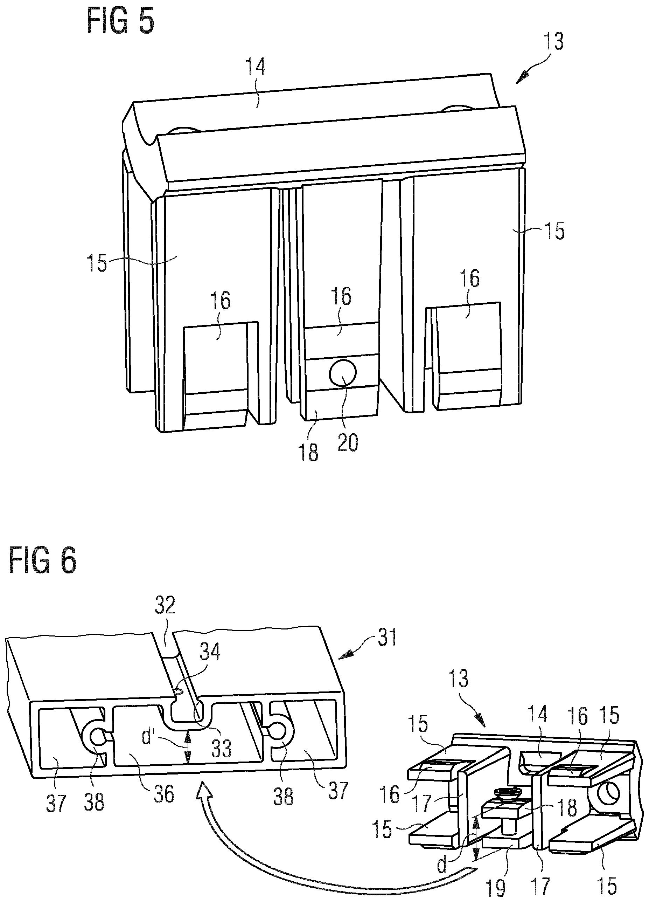

Wie in Figur 6 dargestellt, besteht diese Säule 31 aus einem Profilrohr, vorzugsweise aus Aluminium, welches außen einen im Wesentlichen rechteckigen Querschnitt aufweist. Auf einer Breitseite 35 des Profilrohrs erstreckt sich in Längsrichtung L1 eine Nut 32 für eine Führungsschienen-Verbindung zur Kopplung mit dem Kabelhalter 50, wie dies später noch erläutert wird. Diese Nut 32 ist im Wesentlichen T-förmig mit Hinterschneidungskanten 33 ausgebildet. In einem oberen Endbereich der Säule 31 befindet sich in der Nut eine Bohrung 34 für eine Schraube zur Befestigung des Koppelstücks 13 im Profilrohr. Im Inneren weist das Profilrohr zwei in Längsrichtung verlaufende Profilstreben auf, so dass das Profilrohr drei längslaufende Kammern, zwei Außenkammern 37 und eine Innenkammer 36, aufweist. Diese Profilstreben 38 weisen einen Ω-förmigen Querschnitt auf, so dass sie am unteren, zum Fuß 39 weisenden Ende der Säule 31 als Schraubkanäle für, vorzugsweise selbstschneidende, Schrauben genutzt werden können, um die Säule am Fuß 39, zum Beispiel von unten durch die Sockelplatte hindurch, fest zu schrauben. Zusätzlich können die Profilstreben 38 die Stabilität erhöhen.

In die Innenkammer 36 erstreckt sich mittig entlang der Längsachse eine Rippe, die durch die von außen in die Außenwand eingeformte Nut 32 gebildet wird. Im Bereich der Nut 32 ist daher der Innenquerschnitt d' der Innenkammer 36, d. h. das lichte Maß zwischen der Innenseite des Nutgrunds und der Innenseite der von der Breitseite 35 mit der Nut 32 abgewandten rückwärtigen Breitseite (die bei der Säule in dem Ausführungsbeispiel gemäß den Figuren 1 bis 3 als Frontseite in Richtung des Betrachters der Tablet-Oberfläche weist) verengt. Das Koppelstück 13 weist dementsprechend in einem mittleren Bereich zwei sich nach unten (in Figur 6 schräg nach vorne) erstreckende mittlere Zungen 18, 19 auf, die so beabstandet sind, dass die Distanz d zwischen ihren Außenseiten passend zu diesem lichten Maß d' in der Innenkammer 36 des Profilrohrs 31 gewählt ist. Diese inneren Zungen 18, 19 sind zudem so angeordnet, dass eine hintere Zunge 19, welche an der von der Nut 32 abgewandten Breitseite des Profilrohrs anliegt, am Rand des Gelenklagers 14 bzw. des Koppelstücks 13 angeordnet ist und die zugehörige parallele Zunge 18 vom Rand aus gesehen nach innen, in etwa in die Mitte unter das Gelenklager 14, versetzt ist. Diese Zungen bzw. Laschen 18, 19 weisen Bohrungen 20 auf, durch die die Schraube eingeschraubt werden kann, welche durch das Schraubloch 34 in der Nut 32 des Profilrohrs hindurchgeschraubt wird, um das Koppelstück 13 stirnseitig im Profilrohr 31 zu befestigen.

Senkrecht zu den Zungen 18, 19 verlaufen weitere Zungen 17 und wiederum senkrecht dazu, in den Endbereichen der (parallel zur Längsachse des Koppelstücks verlaufenden) Außenkanten des Gelenklagers 14 bzw. Koppelstücks 13, parallel versetzt zu den beiden inneren Zungen 18, 19 weitere Zungen 15, deren Abstand so gewählt ist, dass ihre Außenseiten eine Distanz aufweisen, die dem lichten Innenmaß der Innenkammer 36 des Profilrohrs neben der Nut 32 entspricht.

Sämtliche in eine Innenwand des Profilrohrs 31 drückende Zungen 15, 18, 19 weisen jeweils nach außen gerichtet eine Art Andruckwulst 16 auf, um für einen besseren Halt im Profilrohr zu sorgen. Wie dies in Figur 6 durch den Pfeil schematisch dargestellt ist, wird das Koppelstück 13, nachdem das Gelenk 12 daran festgeschraubt wurde, in die innere Kammer 36 des Profilrohrs eingesteckt und dann über das Schraubloch 34 mit Hilfe einer Schraube (nicht dargestellt) verschraubt. Da sich das Schraubloch 34 in der Nut 32 befindet, ist diese Verschraubung kaum sichtbar. Die Position des Koppelstücks im stirnseitigen Ende des Profilrohrs ist außerdem durch die gestrichelte schematische Darstellung des Profilrohrs 31 in Figur 4 auch noch einmal visualisiert.

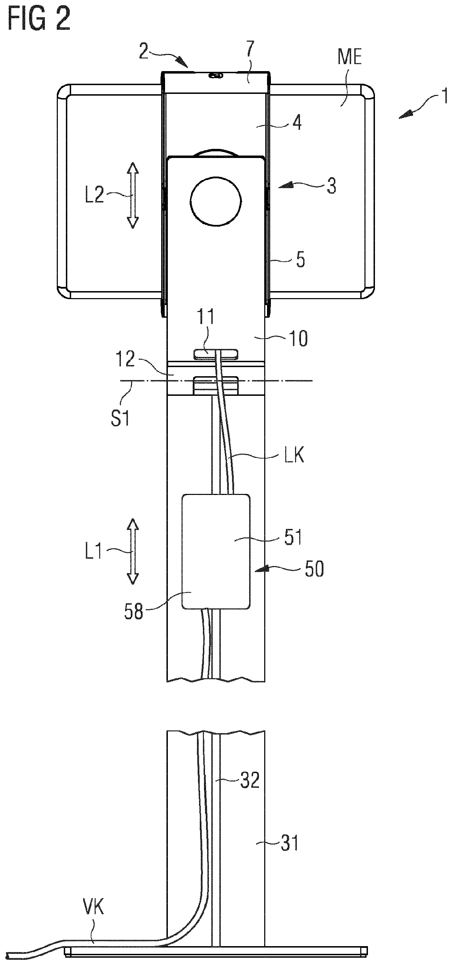

Wie in den Figuren 1 und 2 zu sehen ist, ist an der durch die Säule 31 gebildeten Führungsschiene 31 ein Kabelhalter 50 angeordnet, der gemeinsam mit der Führungsschiene 31 das Kabelhaltersystem 40 bildet.

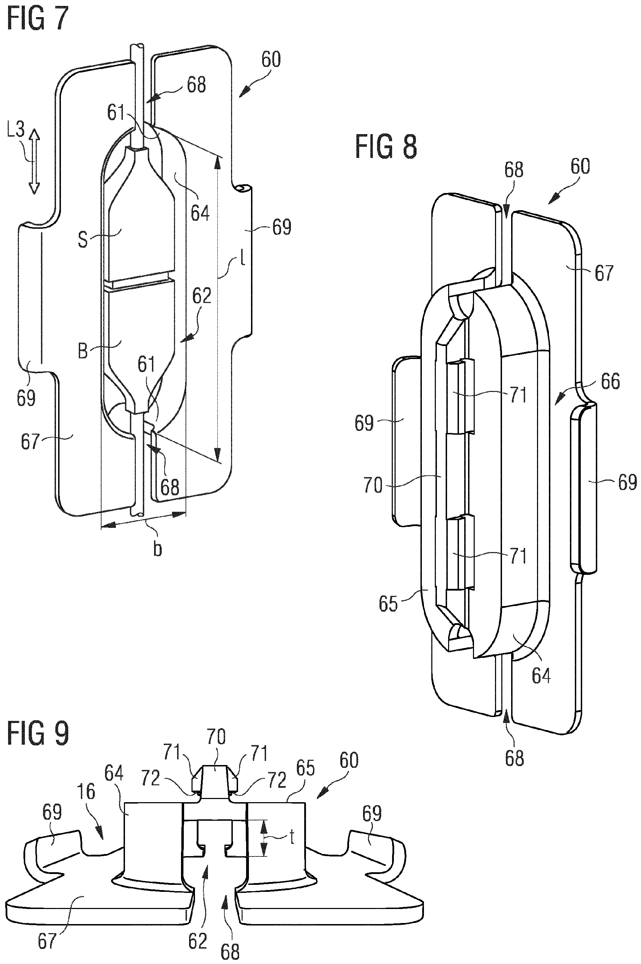

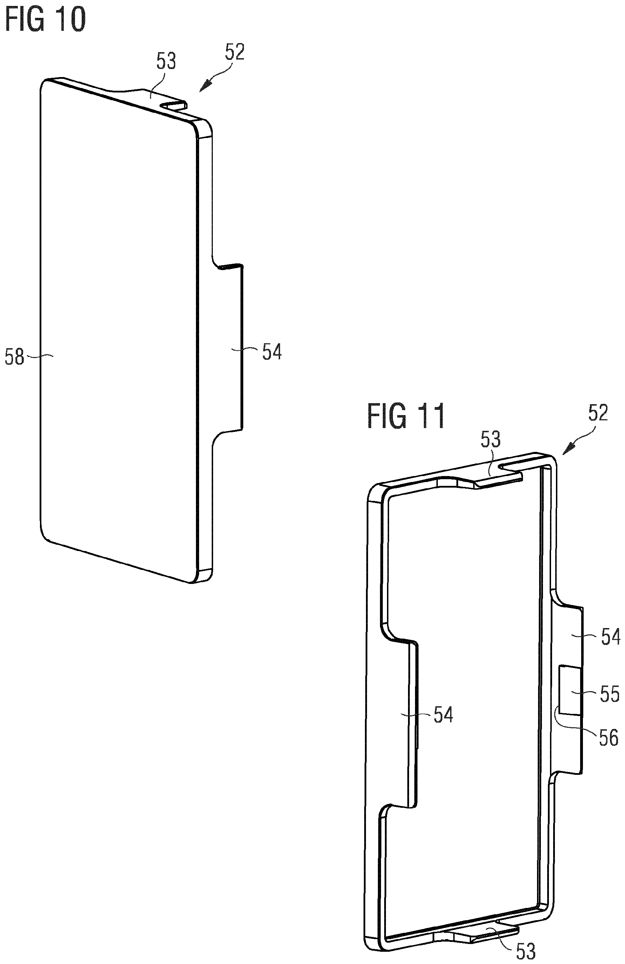

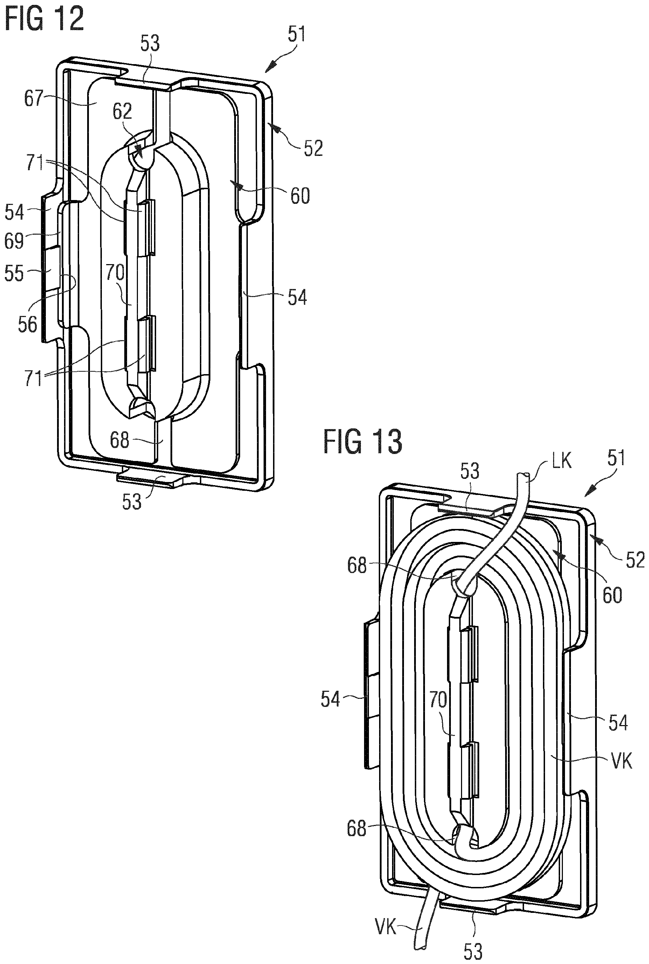

Der Kabelhalter 50 weist hierzu ein Gehäuse 51 auf, welches über die Nut 32 in der Führungsschiene 31 mit dieser gekoppelt sind. Das Gehäuse 51 ist hier zweiteilig ausgebildet, zum einen mit einem ersten Gehäuseteil 60, welches in den Figuren 7, 8 und 9 dargestellt ist, und zum anderen mit einem zweiten Gehäuseteil 52 in Form eines Deckels 52, welches in den Figuren 10 und 11 isoliert dargestellt ist. Die Figuren 12 und 13 zeigen jeweils die beiden Gehäuseteile 52, 60 im zusammengebauten Zustand, einmal mit und einmal ohne darin gehaltene Kabelabschnitte.

Das erste Gehäuseteil 60 weist eine längliche, sich in einer Längsrichtung L3 erstreckende Kavität zur Bildung des Steckeraufnahmeraums 62 auf. Die stirnseitigen Enden 61 des Steckeraufnahmeraums 62 in Längsrichtung L3 sind jeweils abgerundet. Diese Kavität des ersten Gehäuseteils 60 wird durch eine im Wesentlichen umlaufende Seitenwand 64 bzw. Mantelwand und eine Rückwand 65 gebildet, welche den Boden des Steckeraufnahmeraums 62 bildet. "Im Wesentlichen umlaufend" heißt, dass das erste Gehäuseteil 60 in Längsrichtung L3 hier jeweils mittig von den beiden Kanten aus geschlitzt ist. Die Schlitze 68 erstrecken sich dabei von den in Längsrichtung außen liegenden Kanten durch die Seitenwandung 64 des Kabelaufnahmeraums 62 in den Boden bzw. die Rückwand 65 des Kabelaufnahmeraums hinein. Endseitig im Boden sind diese Schlitze 68 abgerundet.

Der Steckeraufnahmeraum 62 ist so dimensioniert, dass ein Stecker-/Buchsenpaar S, B, bestehend aus einem USB-Typ-A-Stecker S und einer damit gekoppelten USB-Typ-A-Buchse B, bequem darin Platz findet und die am Stecker S bzw. der Buchse B angeschlossenen Kabel LK, VK aus den Schlitzen 68 stirnseitig nach außen geführt werden können. Dies ist in Figur 7 durch die gestrichelten Umrisse dargestellt. Der Steckeraufnahmeraum hat eine maximale Länge I (bis zum äußersten Ende der Abrundung, siehe Figur 7) von ca. 80 mm, eine Breite b von ca. 20 mm und eine Tiefe t (siehe Figur 9) von ca. 12 mm. Damit können Stecker-/Buchsenpaare aller derzeit gängigen USB-Typen aufgenommen werden.

An der von der Kavität abgewandten Seite, der Rückwand 65, ist am ersten Gehäuseteil 60 ein sich in Längsrichtung L3 erstreckendes Federelement 70 bzw. eine Feder 70 angeordnet, an der jeweils seitlich mehrere Nasen 71, hier jeweils zwei Nasen 71, angeformt sind. Diese Feder 70 mit den Nasen 71 ist so geformt, dass sie zum Innenmaß der Nut 32 in der Säule 31 bzw. Führungsschiene 31 passt. Das heißt, die Nasen 71 weisen entsprechende Hinterschneidungskanten 72 auf, die hinter die Hinterschneidungskanten 33 der Nut 32 eingreifen können, so dass das erste Gehäuseteil 60 mittels der Feder 70 formschlüssig in der Nut 32 der Säule 31 gehalten werden kann, aber innerhalb dieser Nut 32 von oben nach unten in der Längsrichtung L1 verschiebbar ist. Zur Montage des Kabelhalters 50 an der Führungsschiene 31 bzw. Säule 31 kann dieses erste Gehäuseteil 60 einfach von oben, vor dem Einstecken des Koppelstücks 13, in die Nut 32 eingeschoben werden.

Auf der von der Rückwand 65 abgewandten Vorderseite ist der Steckeraufnahmeraum 62 offen, so dass ein Benutzer bequem die zusammengekoppelten Kabelenden bzw. das Stecker-/Buchsenpaar S, B einlegen und die Kabel durch die Schlitze 68 nach hinten führen kann.

An dieser Vorderseite, d. h. am vorderen Rand der Seitenwandung 64, befindet sich ein sich radial nach außen erstreckender, großflächiger Kragen 67, der in einer parallel zur Rückwand 65 des Steckeraufnahmeraums 62 liegenden Ebene einen in Längsrichtung L3 des ersten Gehäuseteils 60 länglichen, im Wesentlichen rechteckigen Querschnitt mit abgerundeten Ecken aufweist. Auch durch diesen Kragen 67 erstrecken sich von außen her radial nach innen in Längsrichtung L3 die Schlitze 68.

Zwischen dem Kragen 67 an der vorderen Außenseite der Seitenwandung 64 des Steckeraufnahmeraums und der Rückseite des ersten Gehäuseteils 60 befindet sich der zunächst noch rückseitig und umlaufend offene Kabelaufnahmeraum 66 in Form eines Kabeltrommelraums 66 bzw. Kabeltrommelteils. Ist dieses erste Gehäuseteil 60 an der Führungsschiene 31 montiert, so bilden der Kragen 67 und die die Nut aufweisende Breitseite 35 der Führungsschiene 31 die seitlichen Begrenzungen bzw. Wangen und die Seitenwandung 64 des Steckeraufnahmeraums 62 den Kern dieser Kabeltrommel. Der Kabeltrommelraum 66 erstreckt sich hiermit quasi ringförmig um den Steckeraufnahmeraum 62. Wie ein Kabel in diesem Kabeltrommelraum 66 aufgewickelt werden kann, ist in Figur 13 dargestellt.

Um den Steckeraufnahmeraum 62 nach vorne abzudecken, kann auf der Vorderseite des Kragens 62 des ersten Gehäuseteils 60 der Deckel 52 lösbar angebracht werden. Dieser Deckel 52 weist, wie dies in den Figuren 10 zu sehen ist, außenseitig eine glatte Frontseite 58 auf, die auch in Figur 2 zu sehen ist und von der Führungsschiene 31 weg weist. An der von der Frontseite 58 abgewandten Innenseite weist der Deckel 52 einen in Richtung zum ersten Gehäuseteil 60 weisenden umlaufenden schmalen Rand 57 auf. Mittig an den Längsseiten und an den oberen und unteren Schmalseiten bzw. Stirnseiten ist dieser umlaufende Rand 57 unter Bildung von Wandabschnitten 54, 53 verlängert. Diese Wandabschnitte 53, 54 ragen im montierten Zustand bis kurz vor die Führungsschiene 31. Sie dienen als radial nach außen seitliche Begrenzung des Kabeltrommelraums 66. Der Kabeltrommelraum 66 ist ohne diesen Deckel 52 also nach außen hin, d. h. vom Kern der Kabeltrommel hin radial nach außen offen ausgebildet, so dass ein Kabel im Wesentlichen ungehindert auf den Kern aufgewickelt oder wieder vom Kern abgewickelt werden kann.

Zur Befestigung weisen die an den Längsseiten befindlichen Wandabschnitte 54 innen Rastnasen 55 mit Hinterschneidungskanten 56 auf. Mit diesen kann der Deckel 52 auf das erste Gehäuseteil 60 aufgeklipst werden. Hierzu weist das erste Gehäuseteil 60 jeweils im mittigen Bereich der Längskanten des Kragens 67 sich nach außen schräg nach hinten erstreckende, kurze Zungen-Abschnitte 69 auf, hinter die die Hinterschneidungskanten 56 der Rastnasen 55 greifen können. Dieser zusammengeklipste Zustand ist in Figur 12 dargestellt. Die Innenseite des Deckels 52 liegt dann flach auf der Frontseite des Kragens 67 an, so dass der Steckeraufnahmeraum 62 bis auf die Schlitze 68 verschlossen ist. Das Gehäuse 51 des Kabelhalters 50 besteht hier also lediglich aus zwei Teilen, die beide kostengünstig im Spritzgussverfahren hergestellt werden können.

Figur 13 zeigt noch einmal die gleiche Ansicht des Kabelhalters 50 wie Figur 12, jedoch jetzt mit eingesetzten Kabelabschnitten. Wie hier zu sehen ist, kann beispielsweise das Ende eines vom Tablet (hier von oben) kommenden Ladekabels LK durch den oberen Schlitz 68 in den Steckeraufnahmeraum 62 hineingeführt werden, in dem sich dann der endseitige USB-Stecker S des Ladekabels LK befindet. Dieser wird dort mit einer Buchse B eines Verlängerungskabels VK gekoppelt, welches aus dem unteren Schlitz 68 hinausgeführt wird und dann mehrfach in dem Kabeltrommelraum 66 aufgewickelt und schließlich nach unten weggeführt wird. Zusätzlich oder alternativ kann aber auch das vom gerät ME kommende Kabel LK mehrfach in dem Kabeltrommelraum 66 aufgewickelt werden, wenn dies zum Beispiel für die Entfernung zwischen Gerät ME und Kabelhalter 50 zu lang ist.

Die Positionierung des Kabelhalters 50 entlang der Längsrichtung L1 der Führungsschiene 31 bzw. der Säule 31 kann vorzugsweise entsprechend der Länge des Ladekabels LK des Tablets ME erfolgen. Durch das mehrfache Umwickeln des Verlängerungskabels im Kabeltrommelraum 60 des Kabelhalters 50 wird dieses ebenfalls sicher gehalten, so dass die Steckverbindung zwischen Stecker S und Buchse B keiner mechanischen Belastung ausgesetzt ist und sich somit nicht lösen kann.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So muss beispielsweise nicht immer der Steckeraufnahmeraum 62 genutzt werden, sondern der Kabelhalter 50 kann beispielsweise auch nur zur Fixierung eines Kabels dienen, indem dieses mehrfach um den Kern der Kabeltrommel herumgewickelt oder ggf. einfach einmal von oben nach unten durch die Schlitze 68 durch den Steckeraufnahmeraum 62 geführt wird und dann einmal oder mehrfach um den Kern der Kabeltrommel herumgewickelt wird, um zu vermeiden, dass bei einem Zug auf das Kabel dieses sich vom Tablet lösen kann. Insbesondere können die oben beschriebenen besonderen Merkmale der Varianten gegebenenfalls auch miteinander kombiniert werden. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Gerätehaltersystem / Tablet-Halter
- 2: Kopplungsteil
- 3: Klemmeinrichtung
- 4: Backe
- 5: Backe
- 6: Führungsschlitten
- 7: Krallenteile
- 7K: Krallen
- 7S: Steg
- 8: Durchlass
- 9: Kopplungselement
- 10: Schwenkarm
- 11: Durchbruch
- 12: Gelenk
- 13: Koppelstück
- 14: Gelenklager
- 15: Zunge
- 16: Andruckwulst
- 17: Zunge
- 18: Zunge
- 19: Zunge
- 20: Bohrung
- 21: Löcher
- 30: Basisteil
- 31: Führungsschiene / Säule
- 32: Nut
- 33: Hinterschneidungskante
- 34: Bohrung
- 35: Breitseite
- 36: Innenkammer
- 37: Außenkammer
- 38: Profilstreben
- 39: Fuß
- 40: Kabelhaltersystem
- 50: Kabelhalter
- 51: Gehäuse
- 52: zweites Gehäuseteil / Deckel
- 53: Wandabschnitt
- 54: Wandabschnitt
- 55: Rastnasen
- 56: Hinterschneidungskante
- 57: Rand
- 58: Frontseite
- 60: erstes Gehäuseteil
- 61: stirnseitigen Enden
- 62: Steckeraufnahmeraum
- 64: Seitenwand
- 65: Rückwand
- 66: Kabelaufnahmeraum / Kabeltrommelraum
- 67: Kragen
- 68: Schlitze
- 69: Zungen-Abschnitte
- 70: Federelement /Feder
- 71: Nase
- 72: Hinterschneidungskante
- ME: Gerät / mobiles Endgerät / Tablet
- LK: Ladekabel
- VK: Verlängerungskabels
- B: Buchse
- S: Stecker
- L1: Längsrichtung
- L2: Längsrichtung
- L3: Längsrichtung
- S1: Schwenkachse
- S2: Drehachse
- I: Länge
- b: Breite
- t: Tiefe
- d': Innenquerschnitt
- d: Distanz

## Patentansprüche

1. Kabelhalter (50) mit einem Gehäuse (51)
- mit einem Steckeraufnahmeraum (62) zur Aufnahme eines Stecker-/Buchsenpaares (S, B) zweier miteinander gekoppelter Kabelenden,
- mit einem Kabelaufnahmeraum (66), zur Aufnahme eines darin aufgewickelten Kabelabschnitts,
- und einem Führungsschienen-Verbindungselement (70) zur Kopplung mit einer Führungsschiene (31),
wobei der Kabelaufnahmeraum (66) als Kabeltrommelraum (66) ausgebildet ist, der den Steckeraufnahmeraum (62) umgibt.

2. Kabelhalter nach Anspruch 1, wobei der Steckeraufnahmeraum (62) in einem Gehäuseteil (60) angeordnet ist und vorzugsweise eine Seitenwand (64) aufweist, die einen Rollenkern für den Kabeltrommelraum (66) bildet.

3. Kabelhalter nach Anspruch 1 oder 2, wobei der Steckeraufnahmeraum (62) in einem Gehäuseteil (60) angeordnet ist, welches an einer Rückseite das Führungsschienen-Verbindungselement (70) aufweist und vorzugsweise zu einer von der Rückseite abgewandten Vorderseite hin offen ist.

4. Kabelhalter nach Anspruch 2 oder 3, wobei das Gehäuseteil (60) an seiner Vorderseite einen sich nach seitlich außen erstreckenden, vorzugsweise im Wesentlichen um den Steckeraufnahmeraum (62) umlaufenden, Kragen (67) aufweist.

5. Kabelhalter nach einem der vorstehenden Ansprüche, welcher als Führungsschienen-Verbindungselement (70) zumindest ein Federelement (70) für eine Nut-Feder-Verbindung (32, 70) mit der Führungsschiene (31) aufweist.

6. Kabelhalter nach einem der Ansprüche 3 bis 5, mit einem lösbar mit dem Gehäuseteil (60) koppelbaren Deckel (52) zur Abdeckung einer Vorderseite des Gehäuseteils (60).

7. Kabelhaltersystem (40) mit mindestens einem Kabelhalter (50) nach einem der vorstehenden Ansprüche und einer Führungsschiene (31) zur Koppelung mit dem Kabelhalter (50).

8. Verwendung eines Kabelhaltersystems (40) nach Anspruch 7, zur Halterung eines Kabels (LK, VK) eines mobilen Endgeräts (ME), vorzugsweise eines Tablets (ME) oder eines Smartphones.

9. Gerätehaltersystem (1) zur Halterung eines kabelgebundenen Geräts (ME) mit einem Kabelhaltersystem (40) nach Anspruch 7.

10. Gerätehaltersystem nach Anspruch 9, mit einer Säule (31), welche die Führungsschiene (31) zur Koppelung mit dem Kabelhalter umfasst, wobei vorzugsweise die Säule (31) als Führungsschiene (31) ausgebildet ist oder die Führungsschiene in die Säule integriert ist.

11. Gerätehaltersystem zur Halterung eines kabelgebundenen Geräts (ME), insbesondere nach Anspruch 9 oder 10, mit einer Haltebasis (30), vorzugsweise mit einer Säule (31), und einem damit verbundenen Kopplungsteil (2) zur Kopplung mit dem Gerät (ME), wobei die Haltebasis (30), vorzugsweise die Säule (31), ein Profilrohr umfasst und ein an eine Abmessung des Profilrohr angepasstes, vorzugsweise in das Profilrohr einsteckbares Koppelstück (13), welches mit dem Kopplungsteil (2) verbunden ist.

12. Gerätehaltersystem nach einem der Ansprüche 9 bis 11, wobei das Kopplungsteil (2) eine Klemmeinrichtung (3) mit zwei an einem Führungsschlitten (6) in einer Längsrichtung (L2) gegeneinander verschiebbar gelagerten Backen (4, 5) umfasst, welche über einen Bewegungsmechanismus so miteinander gekoppelt sind, dass bei einer Bewegung einer der Backen (4, 5) relativ zum Führungsschlitten (6) die gegenüberliegende Backe synchron relativ zum Führungsschlitten (6) mitbewegt wird.

13. Gerätehaltersystem zur Halterung eines kabelgebundenen Geräts (ME), insbesondere nach einem der Ansprüche 9 bis 12, mit einer Haltebasis (30), vorzugsweise mit einer Säule (31), und einem damit verbundenen Kopplungsteil (2) zur Kopplung mit dem Gerät (ME), wobei das Kopplungsteil (2) über ein selbsthaltendes Gelenk (12) schwenkbar mit der Haltebasis (30) verbunden ist.

14. Verwendung eines Gerätehaltersystems (1) nach einem der Ansprüche 9 bis 13 zur Halterung eines mobilen Endgeräts (ME), vorzugsweise eines Tablets oder eines Smartphones.
